Europäisches Patentamt

European Patent Office

Office européen des brevets

(19)

(11) Publication number: 0 496 998 A1

# EUROPEAN PATENT APPLICATION

(12)

(21) Application number: 91121945.9

(22) Date of filing: 20.12.91

(51) Int. Cl.5: G21C 17/108

(30) Priority: 30.01.91 US 647888

(43) Date of publication of application:
05.08.92 Bulletin 92/32

(84) Designated Contracting States:
BE CH DE ES FR LI SE

(71) Applicant: COMBUSTION ENGINEERING, INC.
1000 Prospect Hill Road
Windsor, Connecticut 06095(US)

(72) Inventor: Banda, Lionel Alfred
166 Rosemary Lane
South Windsor, Connecticut 06074(US)
Inventor: Burger, Joseph Michael
6 Brianwood Lane
Granby, Connecticut 06035(US)

(74) Representative: Gross, Gernot K.
Rechtsanwalt
Kleiberweg 5
W-6200 Wiesbaden(DE)

(54) Extending in-core instrument life.

(57) A nuclear core (20) of a pressurized nuclear reactor (10) has its older detector assembly designs (32) "recharged" by a mini-detector (50) consisting of a small axially spaced cluster of rhodium detectors in a solid outer sheath sized to permit both insertion in bottom entry dry-thimbles (30) which accommodate the traditional movable fission chamber or the central "calibration" tube (42) inside of a fixed in-core instrument (ICI) (32) which is typically provided so that a movable fission chamber could be used as a backup in case the fixed detectors failed.

Fig. 5

EP 0 496 998 A1

BACKGROUND OF THE INVENTION

In a pressurized water reactor (PWR) of a nuclear steam supply system, in-core and ex-core instrumentation together are used to demonstrate that the core behaves as designed and predicted, and to help diagnose any anomalies that may occur. More specifically, the tasks performed by the core instrumentation are as follows:

1. Protection:
Initiate reactor trips as required by plant safety analyses;
2. Monitoring:
Alert operators when certain Limiting Conditions for Operation (LCOs) are reached;
3. Surveillance (On-demand):
Verify, on-demand, but at least every 30 days, that power-distribution-related LCOs are not exceeded;
4. Control:
Provide input to control systems;
5. Miscellaneous Functions:
Measure the detailed power distribution to provide data for core-follow, anomaly detection, data archival, instrument calibration, and methods verification.

The manner in which these tasks are accomplished and the split between in-core and ex-core instrumentation varies with PWR design and vintage. The occasionally performed functions of surveillance, calibration, and detailed power-distribution measurement are fulfilled in some plants by movable in-core instruments and in others by fixed in-core instruments. In plants without fixed in-core detectors, core monitoring is accomplished using the ex-core detectors in combination with the movable detector flux mapping system. Bottom-entry dry thimbles allow access to the nuclear fuel for movable fission chamber detectors in one typical prior art arrangement. Plants with fixed in-core detectors can also access the nuclear fuel through the dry thimbles.

The fixed in-core detectors were first used to provide off-line three-dimensional power distribution surveillance capability and the means to verify calculational methods and results through core follow analyses. Subsequent development of plant computer software allowed on-line monitoring of peak linear heat rates. Further development permitted on-line monitoring of axial power distributions, azimuthal tilt and limits to departure for nucleate boiling (DNB). A more recent advance has been the development of an on-line capability to monitor both the radial and axial power distributions from which the margins to thermal limits are determined.

The basic advantage of using fixed instead of movable in-core detectors is that the core power distribution can be quickly calculated and observed continually on-line. This speed allows their use for monitoring the reactor core conditions. Further, by using information from in-core rather than ex-core detectors to monitor the core, greater accuracy is achieved, which yields increased margins to thermal limits. These margin gains can be translated into one or more of the following: higher allowable power levels or peaking factors, additional operating space, and/or added flexibility in fuel management.

The Fixed In-Core Detection System (FICDS) hardware includes the instrument assemblies, guide paths and other supporting structures, field cabling and connectors, and signal conditioning and processing equipment. Typically, approximately 25% of the fuel assemblies are instrumented. Each instrument assembly is inserted in a guide tube at the center of the fuel assembly.

The FICDS of the prior art typically utilizes self-powered neutron detectors (SPNDs) with 40 cm long, 0.045 cm diameter rhodium emitters. Each detector is an integral segment of a piece of coaxial, mineral-insulated cable having an Inconel sheath and a 0.16 cm diameter central conductor. A string of 4 or 5 SPNDs is contained in each instrument assembly, which mechanically protects the detectors, and keeps them separated from water medium in the guide tubes for in-core instruments (ICI) of the fuel assembly, by means of an outer sheath, and positions them accurately. The instrument assembly terminates electrically in a multi-pin electrical connector, which mates with the field cable connector. Mechanically, it terminates in a seal plug which forms the primary pressure boundary.

The rhodium SPND operates on the principle of neutron activation of rhodium-103. The detector is primarily a thermal-neutron detector, with an epithermal contribution of approximately 15%. After rhodium-103 absorbs a neutron, the rhodium-104 nucleus decays, emitting gamma and beta radiation. A fraction of the energetic betas (electrons) escape the emitter and are collected in the detector sheath. If the circuit between the lead-wire and the sheath is closed, a current which is proportional to the neutron absorption rate is measured by the data acquisition system. About 6% of the betas are emitted promptly after neutron absorption; the remainder decay with a half-life of 42 seconds. The detectors described above have good signal strength and exhibit low background signals. Background signals are reactor initiated signals that are not a result of the neutron-rhodium reaction. For applications requiring a prompt response, a dynamic compensation filter accounts for the delayed response of the rhodium detector.

The small electrical current produced by the rhodium SPND (about 2 micro-amps at nominal conditions) is conducted through well-shielded cables to the plant computer data acquisition system. Specially-designed, low-impedance, high-gain, current-to-voltage amplifiers, which also perform noise filtering, produce a 0-10 volt output. The amplified signals are then multiplexed and converted from analog to digital signals. The signals are then further processed in the plant computer to correct for background, emitter burnup effects, and if needed, dynamically compensated for beta-decay effects. The signals are then available as input for the power distribution monitoring and surveillance systems.

Detectors generally remain in the core up to 65-70% depletion of the rhodium emitter, which typically corresponds to 4-5 full power years of operation. The change in detector sensitivity due to neutron activation is accounted for by using a linear depletion law.

The accuracy of the FICDS hardware and associated software has been established by analyzing the sizable data base of measured power distributions for:

$F_q$ (three-dimensional peak);

$F_r$ (integrated radial peak); and,

$F_{xy}$ (planar radial peak).

The purpose of core surveillance and monitoring systems is to provide assurance that the plant is operated in a manner consistent with the safety analyses. These systems are intended to ensure that at the initiation of any Design Basis Event, the plant variables are within bounds that have been demonstrated by safety analyses to yield acceptable results relative to NRC acceptance criteria.

The traditional approach of replacing detectors is costly, not only because of the cost of the instruments, but also because it generates high level and low level waste, it exposes maintenance workers to radiation, and it often consumes precious critical path time. Because of rhodium depletion, their replacement becomes necessary.

## SUMMARY OF THE INVENTION

The present invention consists of the unique application of a new miniature detector design to supplement or "recharge" existing, older detector assembly designs in nuclear steam supply system reactor cores.

The mini-detector assembly consists of an axially spaced cluster of rhodium detectors in a solid outer sheath sized to permit both insertion in bottom entry dry thimbles which accommodate the traditional movable fission chamber or the central "calibration" tube inside of a fixed in-core instrument (ICI) which is typically provided so that a movable fission chamber could be used as a backup in case the fixed detectors somehow failed.

The essence of the invention is to insert a number of mini-detectors in the dry central calibration tube of selected full size original ICI's. The plan calls for putting fresh "minis" into standards whose rhodium emitters are close to the recommended maximum depletion value. This concept, we believe, represents the first time that fresh rhodium emitters can be permanently lined up axially with other emitters in the same axial core location and cross checked with various depletion levels. Moreover, the new mini detector assembly is not an experimental prototype. It is, in fact functionally, the same as production mini detectors are expected to look.

In the initial actual nuclear steam supply system plant application, both the minis and the original detector signals will be collected in parallel for analysis. The end result should provide the basis to raise the limit on rhodium depletion to a much higher percentage than the current value of 65%. This could result in leaving detectors in the plant for an additional fuel cycle at considerable savings.

This test will also result in verification of the minis as a stand alone instrument. The program will also produce data, which, in conjunction with the old standard detectors, will extend the useful life of both the minis and the original detectors.

## BRIEF DESCRIPTION OF THE DRAWINGS

Fig. 1 is a schematic elevational view of a pressurized water nuclear reactor (PWR) of the type which has dry bottom-entry thimbles which accommodate a traditional movable fission chamber detectors and teleflex drive cables;

Fig. 2 is a schematic cross-sectional view of a PWR core showing approximately 25% of the fuel assemblies instrumented;

3

Fig. 3 is a schematic elevational view showing the axial position of the give detectors of a "standard" fixed in-core instrument assembly relative to the active core, as well as a calibration tube with a movable in-core detector therein;

Fig. 4 is a schematic of a standard rhodium self-powered in-core instrument assembly with a central dry calibration or movable detector tube;

Fig. 4a is a cross-section taken along line 4a-4a of Fig. 4.

Fig. 5 is a schematic cross-sectional view of a mini in-core instrument assembly in the dry calibration tube of a standard fixed in-core instrument assembly surrounded by water medium of a core within a fuel assembly in-core instrumentation guide tube.

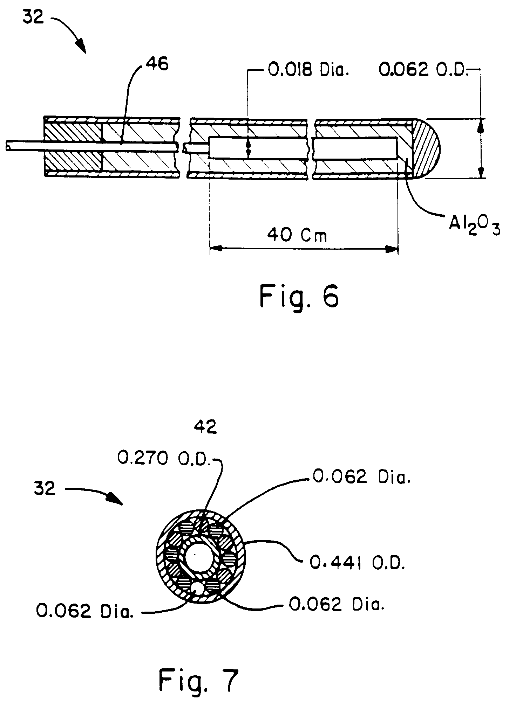

Fig. 6 is a schematic side elevational view of a "standard" rhodium detector.

Fig. 7 is a detailed schematic cross-section of an in-core instrument assembly of Fig. 4 similar to Fig. 4a.

DESCRIPTION OF THE PREFERRED EMBODIMENT

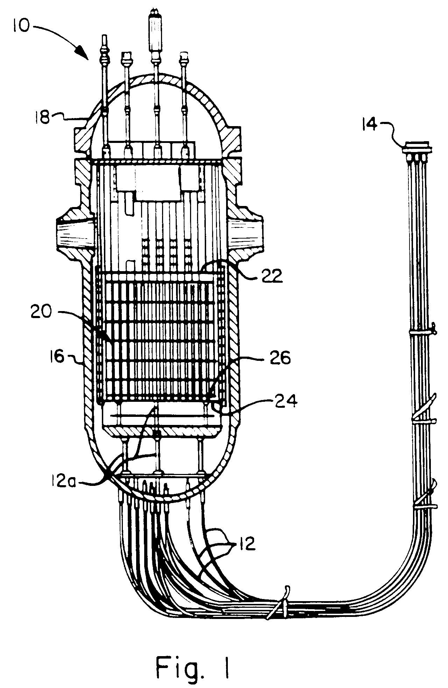

The numeral 10 in Fig. 1 generally designates a pressurized water nuclear reactor having bottom mounted in-core-instrumentation guide tubes 12 connected to a seal table 14 in a manner well known in the art.

The reactor 10 includes a vessel 16 and vessel head 18 and a core 20 made up of a plurality of fuel assemblies. The core 20 has an upper core plate 22 above it and a lower core plate 24 below it. The fuel assemblies of core 20 each have a flow distribution plate 26 spaced from and located above the lower core plate 24. A plurality of instrument thimble guide tubes 12a are shown within the reactor vessel schematically. These thimble guide tubes 12a guide the in-core-instrumentation thimble tubes or thimbles 30 up through the bottom of vessel 16, the openings 32 in core support plate 24 and openings 34 in the fuel assembly flow distribution plate 26. These thimbles 30 provide the guide path for the insertion of moveable nuclear flux detectors (not shown) used for reactor operations. Other reactor structure of Fig. 1 is not pertinent to the invention description. See U.S. Patent No. 4,975,241 assigned to the same assignee as the instant invention for further information.

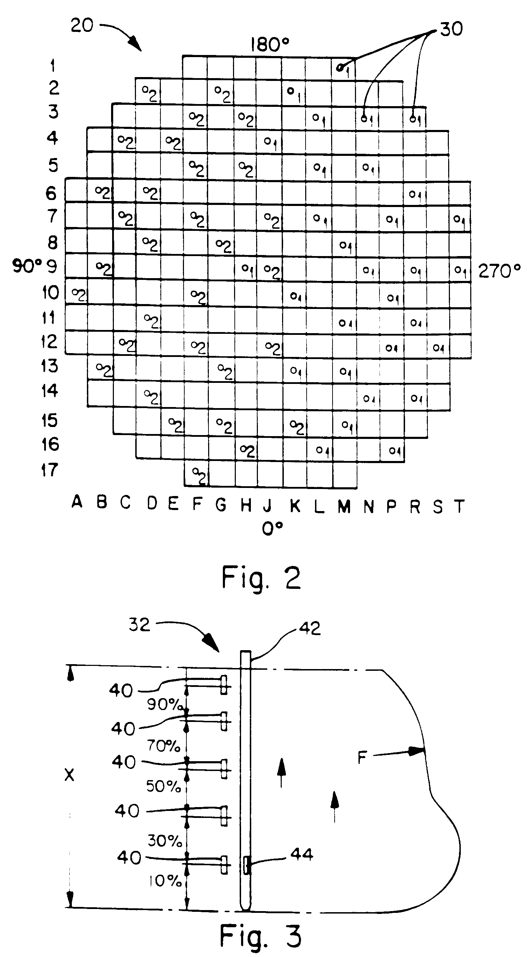

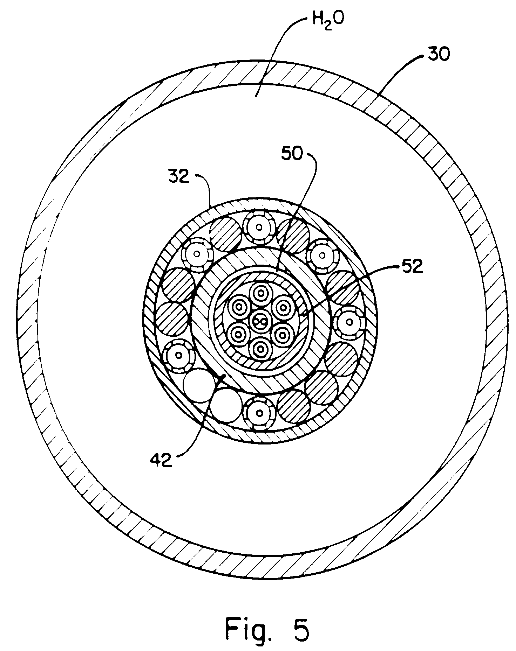

In Fig. 2 a schematic cross-sectional view of the PWR core 20 illustrates that approximately 25% of the fuel assemblies, each represented by a square, have a central in-core instrumentation tube 30. These tubes are indicated by the numerals 1 or 2 to signify which of two transfer machines control the in-core detector of that instrumented fuel assembly. They are central of the individual fuel assemblies and are open to flow of the water medium in the core around "standard" in-core instruments, as shown schematically in Fig. 5.

Fig. 3 schematically shows that coolant flow up through the fuel assemblies occurs. As seen there, typical axial flux distribution F is measured by means of the standard ICI (generally designated 32) five local self-powered neutron detectors (SPND) 40 which are radially outside the dry central calibrating tube 42 and arranged at different points along the active core height "x". A prior art movable detector 44 is shown in Fig. 3, but in accordance with the present invention, the dry tube 42 will contain a "mini" in-core instrument assembly 50 having a rhodium detector.

In order to differentiate "standard" in-core detectors or instruments 32 of the prior art from the new "mini" detectors reference should be had to Table I.

4

TABLE I

| TYPICAL MECHANICAL DESIGN | | |
|---|---|---|
| ICI | STANDARD OR ORIGINAL EQUIPMENT 32 | "MINI" DETECTOR 50 |
| Nuclear Materials | None | None |
| RH Mass | 800 mg | 800 mg |
| RH Diameter | 0.018" | 0.018" |
| # of RH Emitters | 5 | 5 |
| Tails | Yes | Yes |
| Background | Yes | Yes |
| Sheath Mat'l. | INCO 600 | INCO 600 |
| ICI Diameter | 0.045" | 0.190" |
| Environment | Wet | Wet or Dry |
| Connector | Litton 9 Pin | Litton 9 Pin |
| Thermocouple | Type K GRND | Type K GRND |
| Detector Locations | 10,30,50,70,90% | Same |
| TC Location | Tip | 2" Lower |
| How Secured | Drive Nut | Quick Disconnect |

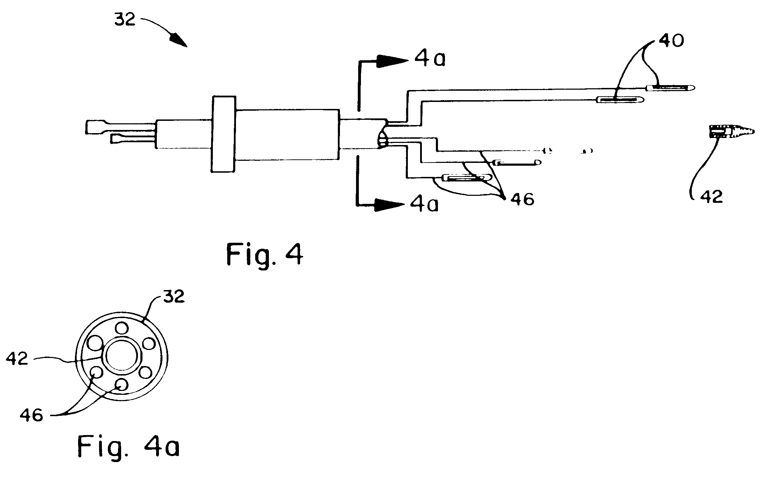

Figure 4 shows an in-core instrument (ICI) assembly with five detectors 40, signal cable lead wires 46 and a seal plug 48 for passage through the pressure barrier. Fig. 4a is a cross section showing the location of the central dry passageway or tube 42 in a standard ICI 32.

Figure 5 schematically expands the view of Figure 4a and illustrates how the mini ICI 50 fits in the dry tube 42 of the standard ICI 32.

It should be noted that all of the dimensions given in this application are typical but are not critical as long as the assembled relations referred to are accomplished.

An important thing to note is that there is no central passage 42 in the mini ICI 50, as shown in Fig. 5. Otherwise the basic structure and emitter size of the mini ICI 50 is similar to that of ICI 32. Table I illustrates this point. Moreover, the sheath in the mini ICI 50 has its detectors 40 with rhodium detectors axially staggered so that swaging down of the outer sheath against the signal cable lead wires 46 will only involve swaging against one detector 40 at that point. This concept is shown schematically in Fig. 4 by the axial stagger of the five detectors 40.

Although the invention is believed best practiced by putting the mini ICI's 50 within a dry passageway of either calibration tube 42 or dry bottom-entry thimble 30 of a Fig. 1 type of PWR, the mini ICI's 50 may be used in place of standard ICI's 32, if the capacity to use movable in-core instruments 44 is not important or necessary. In this case, the thinner ICI outside sheath 52 could deteriorate in the wet ICI guide tube 30 of a fuel assembly.

**Claims**

1. In a nuclear reactor core having dry passageways for receipt of movable instrument assemblies, the improvement comprising:

   a plurality of self-powered neutron detector instrument assemblies fixed within the dry passageways at a plurality of axial positions along the dry passageways to monitor power shapes and core performance.

2. The nuclear reactor core of claim 1 in which the dry passageways are bottom-entry dry thimbles for accommodation of traditional movable in-core detectors.

3. The nuclear reactor core of claim 1 in which the dry passageways are within in-core instrument assemblies having axially arrayed fixed self-powered neutron detectors.

4. The nuclear reactor core of claim 3 in which the in-core instrument assemblies having dry passageways include dry passageways which are in the form of a central calibrating tube.

5. The nuclear reactor core of claim 4 in which the plurality of axial positions along the dry passageways are aligned with fixed self-powered detectors which are radially outside of the dry passageways.

6. In a nuclear reactor core of the type with dry passageways for receipt of instrument assemblies having axially arrayed fixed self-powered neutron detectors radially outside a central calibrating tube, the improvement comprising instrument assemblies having fixed self-powered neutron detectors radially within the calibrating tubes with the detectors fixed at a plurality of axial positions along the dry passageway in alignment with the fixed self-powered neutron detectors radially outside the central calibration tube.

7. The nuclear reactor core of claim 1 in which the instrument assemblies include rhodium detectors.

Fig. 1

20

180°

30

90° 9 ... 270°

A B C D E F G H J K L M N P R S T

0°

# Fig. 2

32    42

40
90%
40
70%
40
50%
40
30%
40    44
10%

X

F

# Fig. 3

Fig. 4

Fig. 4a

EP 0 496 998 A1

Fig. 5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | JP-A-62 014 092 (TOSHIBA) <br> * figures 1-3 * | 1-4,7 | G21C17/108 |
| A | | 5-6 | |
| | --- | | |
| Y | IEEE TRANSACTIONS ON NUCLEAR SCIENCE <br> vol. NS-31, no. 1, February 1984, NEW YORK <br> U.S.A. <br> pages 761 - 765; <br> R. M. VERSLUIS: 'C-E in-core instrumentation. <br> Functions and performance' <br> * the whole document * | 1-4,7 | |
| | --- | | |
| A | IEEE TRANSACTIONS ON NUCLEAR SCIENCE <br> vol. NS-26, no. 1, February 1979, NEW YORK U.S.A <br> pages 944 - 948; <br> THOMAS D. CURTIS: 'SPND operating experience at <br> Oconee nuclear station' <br> * page 944 * | 1-7 | |
| | --- | | |
| A | EP-A-0 403 223 (GENERAL ELECTRIC COMPANY) <br> * column 4, line 44 - column 7, line 47; figures <br> 1-4 * | 1-6 | TECHNICAL FIELDS SEARCHED (Int. Cl.5) |
| | --- | | |
| A | EP-A-0 346 170 (FRAMATOME) <br> * column 3, line 35 - line 57 * <br> * column 4, line 49 - column 5, line 64; figures <br> 1-2 * | 1-6 | G21C |
| | --- | | |
| A | FR-A-2 039 289 (LICENTIA PATENT-VERWALTUNG) <br> * the whole document * | 1,6 | |
| | --- | | |
| D,A | EP-A-0 352 476 (COMBUSTION ENGINEERING) <br> * abstract; figure 1 * | 1 | |
| | ----- | | |

The present search report has been drawn up for all claims

| Place of search | Date of completion of the search | Examiner |
|---|---|---|
| THE HAGUE | 22 APRIL 1992 | DEROUBAIX P.G |